# EUROPÄISCHE PATENTSCHRIFT

(11) **EP 2 392 538 B1**
(45) Veröffentlichungstag und Bekanntmachung des Hinweises auf die Patenterteilung: **15.01.2014**
(21) Anmeldenummer: 11004523.4
(22) Anmeldetag: 03.06.2011
(51) Int. Cl.: B62B 3/06, B62D 51/02, G05D 1/00, G05D 1/02, B66F 9/075, B66F 9/24, B66F 17/00

(54) **Horizontalkommissionierer**
Horizontal picker
Chariot préparateur horizontal

(30) Priorität: 04.06.2010 DE 102010022678
(43) Veröffentlichungstag der Anmeldung: 07.12.2011
(73) Patentinhaber: Jungheinrich Aktiengesellschaft, 22047 Hamburg (DE)
(72) Erfinder: Hiekel, Oliver, 22085 Hamburg (DE)
(74) Vertreter: Hauck Patent- und Rechtsanwälte

(56) Entgegenhaltungen:
- EP-A2- 2 079 065
- US-A- 3 825 130
- US-A1- 2008 129 445

## Beschreibung

Die vorliegende Erfindung betrifft einen Horizontalkommissionierer mit einem Bedienstand und einem Lastteil, der zur Aufnahme von mindestens einem Kommissionierbehälter vorgesehen ist.

Während des Vorgangs des Kommissionierens fährt die Bedienperson den Kommissionierer an einen vorbestimmten Ort, von wo aus die zu kommissionierenden Güter in die Kommissionierbehälter gelegt werden können. In der Fachsprache wird dieser Ort als Aufnahmepunkt oder als Pick bezeichnet. Statistiken belegen, dass für den gesamten Kommissioniervorgang ungefähr 60 % der Zeit für das Kommissionieren, also das Aufnehmen der Waren aus dem Lager und das Verstauen in den Kommissionierbehältern und 40 % für das Fahren zwischen den Aufnahmepunkten entfällt. Bei großen Lagern, in denen mehrere Millionen Güter pro Woche kommissioniert werden, haben Statistiken ergeben, dass jede Sekunde Zeitersparnis beim Kommissionieren eine ganz erhebliche Einsparung bezogen auf das Jahr ergibt.

Bei dem herkömmlichen Kommissioniervorgang muss die Bedienperson mehrfach die Strecke zwischen dem Aufnahmepunkt und dem Kommissionierbehälter sowie einmal die Strecke zwischen dem Kommissionierbehälter und dem Bedienstand des Horizontalkommissionierers zurücklegen. Diese Bewegung zwischen den drei Punkten ist zeitintensiv.

Aus den USA ist ein Horizontalkommissionierer mit einer Funktion bekannt, bei der Fahrer aus dem fahrenden Fahrzeug springt und das Fahrzeug selbständig durch Blockieren der Bremse eine gewisse Strecke weiterfährt. Auf diese Weise wird der Kommissionierbehälter, der in der Regel sich in Fahrtrichtung hinter der Bedienperson befindet, näher an den Standort des Fahrers gebracht. Eine solche Funktion, bei der ein Fahrer das fahrende Fahrzeug verlässt, ist mit deutschen und europäischen Sicherheitsvorschriften für Flurförderzeuge nicht vereinbar.

Aus Dokument D1 (EP 2 079 065 A2) ist eine Funkfernsteuerung für einen Kommissionierer bekannt geworden. Mit Hilfe der Funkfernsteuerung kann eine nicht auf dem Fahrzeug befindliche Bedienperson das Fahrzeug ferngesteuert an eine gewünschte Stelle verfahren.

Der Erfindung liegt die Aufgabe zugrunde, einen Horizontalkommissionierer bereitzustellen, der die Entfernung zwischen Aufnahmepunkt und dem Kommissionierbehälter in einer mit den Sicherheitsvorschriften vereinbaren Art und Weise reduziert.

Erfindungsgemäß wird die Aufgabe durch einen Horizontalkommissionierer gelöst, der die Merkmale aus Anspruch 1 besitzt. Vorteilhafte Ausgestaltungen bilden den Gegenstand der Unteransprüche.

Der erfindungsgemäße Horizontalkommissionierer besitzt einen Bedienstand und ein Lastteil, der zur Aufnahme von mindestens einem Kommissionierbehälter vorgesehen ist. Üblicherweise befindet sich der Bedienstand in Fahrtrichtung des Horizontalkommissionierers vor den Kommissionierbehältern. Erfindungsgemäß ist in dem Bedienstand ein Bedienelement vorgesehen, bei dessen Betätigung der Horizontalkommissionierer selbsttätig um eine vorbestimmte Wegstrecke verfährt, wobei die Länge der Wegstrecke dem Abstand zwischen dem Bedienstand und einem der Kommissionierbehälter entspricht. Anders als bei der in den USA eingesetzten Lösung ist erfindungsgemäß ein Bedienelement erforderlich, das durch den Fahrer betätigt werden muss, um den Horizontalkommissionierer selbsttätig zu verfahren. Die verfahrene Wegstrecke ist hierbei genau festgelegt und entspricht dem Abstand zwischen dem Bedienstand und einem der Kommissionierbehälter. Der erfindungsgemäße Horizontalkommissionierer erlaubt es, dass die Bedienperson einen Aufnahmepunkt anfährt, das Fahrzeug in diesem Aufnahmepunkt anhält und aus dem stehenden Fahrzeug aussteigt. Durch die Betätigung des Bedienelements fährt das Fahrzeug dann selbständig, so dass einer der Kommissionierbehälter sich genau in Reichweite des Aufnahmepunkts befindet. Hierdurch können die Wege der Bedienperson zwischen Aufnahmepunkt und Kommissionierbehälter eingespart werden. Zum Weiterfahren ist es lediglich erforderlich, dass die Bedienperson einmalig den Weg von dem Aufnahmepunkt zu dem Bedienstand zurücklegt.

Erfindungsgemäß besitzt der Lastteil des erfindungsgemäßen Horizontal-kommissionierers mehrere Kommissionierbehälter, die in Fahrtrichtung hintereinander angeordnet sind, um das Kommissioniergut aufnehmen zu können. Das Bedienelement weist Mittel auf, die die Auswahl eines der mehreren Kommissionierbehälter erlauben, wobei die Länge der zu verfahrenden Wegstrecke entsprechend dem Abstand zwischen ausgewählten Kommissionierbehälter und dem Bedienstand gewählt ist. Auf diese Weise kann die Bedienperson beim Verlassen des Fahrzeugs auswählen, welcher Kommissionierbehälter in eine für das Beladen optimale Position verfahren werden soll.

In einer zweckmäßigen Ausgestaltung ist die Verfahrrichtung derart gewählt, dass einer der Kommissionierbehälter sich nach dem Verfahren in einer Position befindet, in der sich vor dem Verfahren der Bedienstand befand.

In einer weiteren bevorzugten Ausgestaltung löst das Bedienelement einen Verfahrvorgang des Horizontalkommissionierers aus, nachdem das Fahrzeug in den Stillstand abgebremst wurde. Bei dieser Ausgestaltung ist es so, dass der Fahrer die vollständige Kontrolle über das Fahrzeug hat, bis es zum Stillstand gebracht wurde. Erst nach dem Verlassen des stehenden Fahrzeugs wird dieses selbständig durch die Auslösung des Bedienelements verfahren.

Zweckmäßigerweise ist in dem Horizontalkommissionierer ein Sensor vorgesehen, der die zu verfahrende Wegstrecke erfasst und bei Auftreten eines Hindernisses den Verfahrvorgang des Fahrzeugs abbricht. Ein solcher Sensor kann beispielsweise ein Radar sein, es sind aber auch andere Sensoren denkbar. Für die Erfindung ist es vollständig ausreichend, wenn der Sensor lediglich den Bereich vor dem Fahrzeug bis zu einer Entfernung erfasst, um die das Fahrzeug verfahren werden soll. Hierdurch besteht die Möglichkeit, einfache Sensoren mit einer geringen Reichweite einzusetzen.

Die Erfindung wird nachfolgend anhand der Figuren näher erläutert. Es zeigt:
- Fig. 1: den Vorgang des automatischen Positionierens des Horizontalkommissionierers,
- Fig. 2: in einer schematischen Ansicht Auswahlmittel für die Kommissionierbehälter und
- Fig. 3: den Kommissioniervorgang gemäß Stand der Technik.

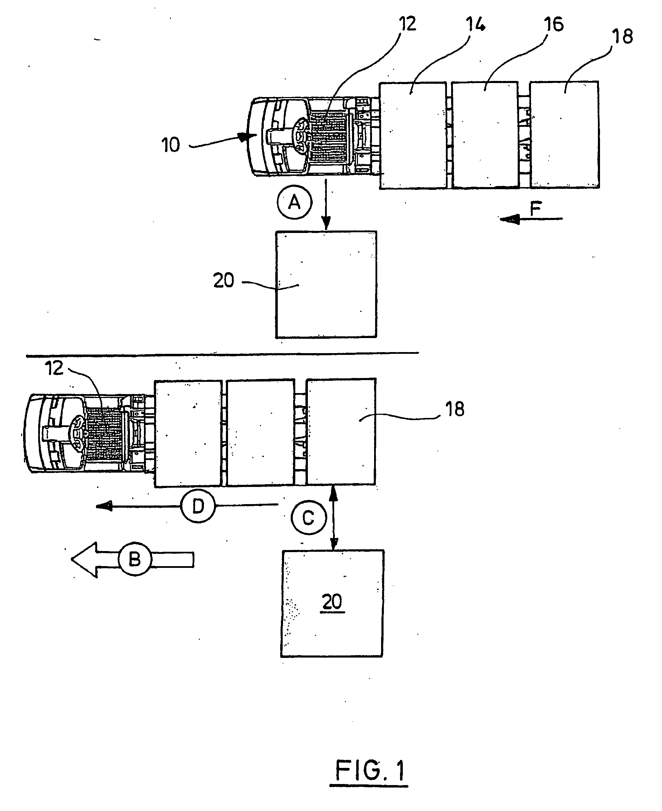

Fig. 1 zeigt in ihrem oberen Abschnitt einen Horizontalkommissionierer 10 mit einem Bedienstand 12 und drei Kommissionierbehältern 14, 16, 18. Die übliche Verfahrrichtung des Horizontalkommissionierers 10 ist durch den Pfeil F angedeutet. Während des Kommissioniervorgangs wird durch eine Bedienposition der Aufnahmepunkt 20 angefahren. Unmittelbar in Griffweite des Aufnahmepunkts 20 befinden sich Regale mit dem Kommissioniergut (nicht dargestellt). Während des Kommissioniervorgangs verlässt der Fahrer den Bedienstand 12 und begibt sich zum Aufnahmepunkt 20 und legt dabei die Wegstrecke A zurück.

Wie in dem unteren Teil von Fig. 1 dargestellt, verfährt das Fahrzeug anschließend selbständig um die Strecke B, so dass sich nicht länger der Bedienstand 12, sondern der Kommissionierbehälter 18 in unmittelbarer Nähe des Aufnahmepunkts 20 befindet. Der Fahrer kann nun das Kommissioniergut in den Kommissionierbehälter 18 hinein geben. Hierzu legt er mehrfach die Strecke C zurück. Nach Beendigung des Kommissioniervorgangs begibt sich die Bedienperson entlang der Strecke D zurück zu dem Bedienstand 12.

Insgesamt legt der Fahrer des Kommissioniervorgangs also einmal die Strecken A und D zurück und mehrmals die Strecke C.

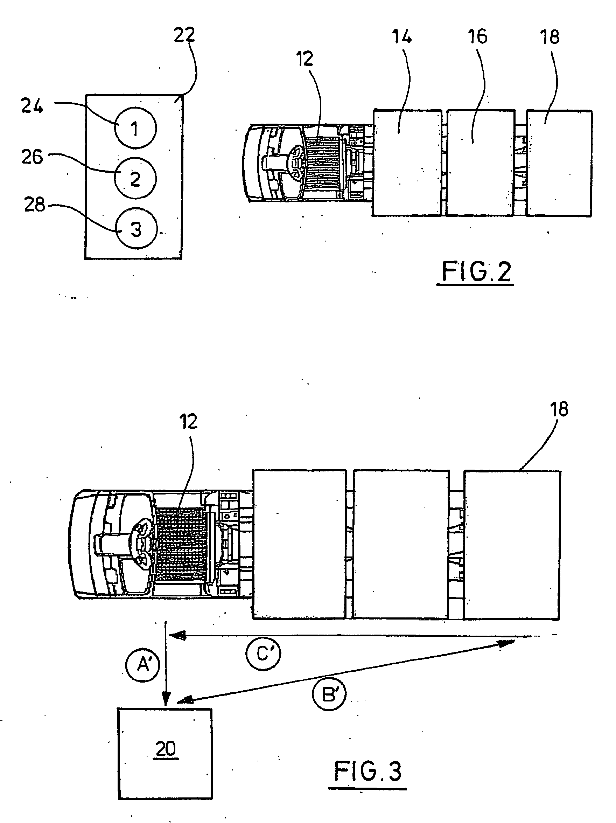

Fig. 3 zeigt die vom Fahrer zurückgelegten Wegstrecken bei der herkömmlichen Kommissionierung. Bei diesem Kommissioniervorgang fährt der Fahrer erneut den Aufnahmepunkt 20 an und verlässt den Bedienstand 12. Hierbei legt er die Wegstrecke A' zurück. Nachfolgend wird im Aufnahmepunkt 20 das Kommissioniergut aufgenommen und in dem Kommissionierbehälter 18 gelagert. Hierzu legt die Bedienperson mehrfach die Strecke B' zurück. Nachdem das letzte Kommissioniergut in den Kommissionierbehälter 18 gegeben wurde, kehrt der Fahrer entlang der Strecke C' zu dem Bedienstand zurück. Die Strecke C' entspricht dabei der Strecke D aus Fig. 1. Aufgrund der Geometrie der Wege werden bei dem herkömmlichen Kommissioniervorgang von dem Fahrer deutlich längerer Wegstrecken zurücklegt als beim Einsatz des erfindungsgemäßen Horizontalkommissionierers. Hinzu kommt, dass üblicherweise beim Stand der Technik die Entfernung A' von einem Fahrer beim Anfahren des Aufnahmepunkts 20 größer gewählt wird, um besser die Kommissionierbehälter entlang der Wegstrecke B' erreichen zu können. Dies entfällt ebenfalls bei dem erfindungsgemäßen Horizontalkommissionierer, bei dem die Strecke A auch deutlich kürzer gewählt werden kann.

Fig. 2 zeigt eine bevorzugte Ausgestaltung, bei dem im Bedienstand 12 ein schematisch dargestelltes Bedienelement 22 vorgesehen ist. Das Bedienelement 22 besitzt drei Schaltmittel 24, 26, 28 mit denen vor oder bei Verlassen des Horizontalkommissionierers der zu befüllende Kommissionierbehälter 14, 16, 18 ausgewählt werden kann.

Bei dem erfindungsgemäße Horizontalkommissionierer wird durch die Betätigung des Bedienelements 22 ein Verfahrvorgang erst dann auslöst, wenn das Fahrzeug sich im vollständigen Stillstand befindet. Bevorzugt kann hier noch eine geringe Verzögerung vorgesehen sein, die es erlaubt, dass der Fahrer des Bedienstands 12 verlässt und sich an den Aufnahmepunkt 20 stellt.

## Patentansprüche

1. Horizontalkommissionierer (10) mit einem Bedienstand (12) und mit einem Lastteil, der zur Aufnahme von mehreren Kommissionierbehältern (14, 16, 18) in Fahrtrichtung (F) hintereinander vorgesehen ist, **dadurch gekennzeichnet, dass** im Bedienstand (12) ein Bedienelement (22) vorgesehen ist, bei dessen Betätigung der Horizontalkommissionierer selbständig um eine vorbestimmte Wegstrecke (D) verfährt und das Bedienelement (22) Mittel (24, 26, 28) aufweist, die eine Auswahl eines der mehreren Kommissionierbehälter (14, 16, 18) erlaubt, wobei die Länge (D) der zu verfahrenden Wegstrecke dem Abstand zwischen dem ausgewählten Kommissionierbehälter und dem Bedienstand (12) entspricht.

2. Horizontalkommissionierer nach Anspruch 1, **dadurch gekennzeichnet, dass** die Verfahrrichtung (F) derart gewählt ist, dass einer der Kommissionierbehälter (14, 16, 18) sich nach dem Verfahren in einer Position (20) befindet, in der sich vor dem Verfahren der Bedienstand (12) befand.

3. Horizontalkommissionierer nach Anspruch 1 oder 2, **dadurch gekennzeichnet, dass** das Bedienelement ein Verfahren des Fahrzeugs auslöst, nachdem das Fahrzeug in den Stillstand abgebremst wurde.

4. Horizontalkommissionierer nach einem der Ansprüche 1 bis 3, **dadurch gekennzeichnet, dass** ein Sensor vorgesehen ist, der die zu verfahrende Wegstrecke erfasst und bei Auftreten eines Hindernisses den selbstätigen Verfahrvorgang abbricht.

5. Horizontalkommissionierer nach Anspruch 4, **dadurch gekennzeichnet, dass** der Sensor als Radar ausgebildet ist.

## Claims

1. A horizontal order picker (10) with an operating platform (12) and a load section which is provided for accommodating at least one order-picking container (14, 16, 18), **characterised in that** an operational control (22) is provided in the operating platform (12), upon actuation of which the horizontal order picker moves for a predetermined distance (D) automatically, and wherein the operational control (22) has means (24, 26, 28) which permit to select one of the plural order-picking containers (14, 16, 18), wherein the length (D) of the distance to be moved corresponds to the offset between the selected order-picking container and the operating platform (12).

2. A horizontal order picker according to claim 1, **characterised in that** the direction of movement (F) is selected such that after moving, one of the order-picking containers (14, 16, 18) is in a position (20) in which the operating platform (12) had been before the movement.

3. A horizontal order picker according to claim 1 or 2, **characterised in that** the operational control triggers a movement of the vehicle after the vehicle had been braked down into standstill.

4. A horizontal order picker according to any one of claims 1 to 3, **characterised in that** a sensor is provided which acquires the distance to be moved and stops the automatic movement process when an obstacle appears.

5. A horizontal order picker according to claim 4, **characterised in that** the sensor is realised as radar.

## Revendications

1. Chariot préparateur horizontal (10) avec un poste de conduite (12) et avec une partie de charge qui est prévue pour loger plusieurs réceptacles de réception (14, 16, 18) en enfilade dans la direction de marche (F), **caractérisé en ce que** un élément de commande (22) est prévu dans le poste de conduite (12), par actionnement duquel le chariot préparateur horizontal se déplace de façon indépendante pour une distance (D) prédéterminée, et que l'élément de commande (22) comporte des moyens (24, 26, 28) qui permettent à choisir un des plusieurs réceptacles de réception (14, 16, 18), la longueur (D) de la distance de déplacement étant correspondante à l'écartement entre le réceptacle de réception choisi et le poste de conduite (12).

2. Chariot préparateur horizontal selon la revendication 1, **caractérisé en ce que** la direction de déplacement (F) est choisie tellement qu'après le déplacement, un des réceptacles de réception (14, 16, 18) se trouve dans une position (20) dans laquelle le poste de conduite (12) se trouvait avant le déplacement.

3. Chariot préparateur horizontal selon la revendication 1 ou 2, **caractérisé en ce que** l'élément de commande déclenche un déplacement du véhicule après que le véhicule était ralenti jusqu'à l'arrêt.

4. Chariot préparateur horizontal selon l'une quelconque des revendications 1 à 3, **caractérisé en ce que** un capteur est prévu qui saisit la distance de déplacement et abandonne le processus de déplacement automatique quand un obstacle apparaît.

5. Chariot préparateur horizontal selon la revendication 4, **caractérisé en ce que** le capteur est réalisé comme un radar.
